Europäisches Patentamt

**European Patent Office**

**Office européen des brevets**

(11) Publication number: **0 159 445**
A2

# EUROPEAN PATENT APPLICATION

(21) Application number: **84308343.7**

(22) Date of filing: **30.11.84**

(51) Int. Cl.⁴: **B 60 K 9/04, B 60 K 17/10**

(30) Priority: **05.12.83 IL 70383**

(43) Date of publication of application: **30.10.85**
**Bulletin 85/44**

(84) Designated Contracting States: **AT BE CH DE FR GB IT LI LU NL SE**

(71) Applicant: **INDUSTRIES DEVELOPMENT CORPORATION (INTERNATIONAL SERVICES) CO. LTD., 4 Chopin Street, IL-Jerusalem (IL)**

(72) Inventor: **Miller, Moshe, Ben Yehuda Street 19, Rehovot (IL)**
Inventor: **Goldhirsh, Moti, HaEmek Street 5/16, Kfar Saba (IL)**

(74) Representative: **Brown, John David et al, FORRESTER & BOEHMERT Widenmayerstrasse 4/I, D-8000 München 22 (DE)**

(54) **Vehicle drive system.**

(57) A vehicle drive system including: a source of rotational energy (10); a flywheel (20); a first variable displacement hydrostatic unit (70); a second variable displacement hydrostatic unit (72); differential gear means (62) comprising a first drive terminal, a second drive terminal and a third drive terminal; and including means for selectable coupling of the variable displacement hydrostatic transmissions and the source of rotational energy and the flywheel to the drive wheels of the vehicle, relief valve means (116) operable between the first and second variable displacement hydrostatic units, first means for coupling in a first mode of operation (1) the flywheel and the source of rotational energy to the first drive terminal; (2) the second drive terminal to the first variable displacement hydrostatic unit; (3) the third drive terminal to the drive wheels; second means for coupling in a second mode of operation (1) the flywheel to the third drive terminal; (2) the engine (10) and the first drive terminal to the drive wheels.

VEHICLE DRIVE SYSTEM

## FIELD OF THE INVENTION

The present invention relates to vehicle drive systems and more particularly to vehicle drive systems employing kinetic energy storage and a hydrostatic transmission.

## BACKGROUND OF THE INVENTION

Various types of vehicle drive systems are known in the patent literature and are presently in use. Among these are systems which employ various types of gearing to effectively extend the operating range of a continuously variable transmission. Such systems may include a source of rotational energy such as a heat engine, and kinetic energy storage such as a flywheel. The flywheel and source of rotational energy may be connected to the continuously variable transmission and to the drive shaft of the vehicle in a number of selectable modes. Such a system is shown in United States patent 4,126,200 which also includes means for operating the heat engine at low speed when the vehicle is at low speed and for directly connecting the engine to the drive shaft of the vehicle at moderate to high vehicle speeds so that the engine increases in speed directly with the increase in vehicle speed.

One of the principle disadvantages of the prior art device described in U.S. patent 4,126,200 is the limited output torque available to accelerate the vehicle from rest. This is of particular consequence in a commercial vehicle such as a city bus which must accelerate quickly to merge with traffic. To provide the required acceleration torque, large and expensive hydrostatic units are required.

Another disadvantage of the prior art device mentioned hereinabove is the wide variation in the speed of accessory components such as pumps, generator, compressor, fans, air conditioner, etc. This wide variation requires that the accessory devices be sized to provide the required power at low engine speed when the vehicle is at standstill or at low speed. At higher vehicle

2

speeds, when the engine is rotating rapidly, the accessory devices provide far to much output, thereby wasting energy.

### SUMMARY OF THE INVENTION

It is the object of the present invention to provide a vehicle drive system which overcomes the disadvantages of the prior art. It is one purpose of this invention to decrease the size and cost of the prior art apparatus by significantly increasing the starting torque available from the transmission thereby allowing a reduction in the size and cost of the hydrostatic components.

It is another purpose of the present invention to provide a power take off drive wherein the speed variation of the accessories is limited, thereby allowing smaller and cheaper components to be used as well as yielding a reduction in the energy required to drive the accessories.

As will be more clearly understood hereinafter, the drive and transmission system of an embodiment of the present invention is particularly suitable for use with a heat engine as the source of rotational energy and provides advantages in size and simplicity of construction which could not be realised even by combining the known features of the above mentioned prior art in this area.

There is thus provided a vehicle drive system including:

    a source of rotational energy;
    a flywheel;
    a first variable displacement hydrostatic unit;
    a second variable displacement hydrostatic unit;

    differential gear means comprising a first drive terminal,
        a second drive terminal and a third drive terminal;
        and including

means for selectable coupling of the variable displacement hydrosatic transmissions and the source of rotational energy and the flywheel to the drive wheels of the vehicle,

relief valve means operable between the first and second variable displacement hydrostatic units,

first means for coupling in a first mode of operation
(1) the flywheel and the source of rotational energy to the first drive terminal;
(2) the second drive terminal to the first variable displacement hydrostatic unit;
(3) the third drive terminal to the drive wheels;

second means for coupling in a second mode of operation
(1) the flywheel to the third drive terminal;
(2) the engine and the first drive terminal to the drive wheels

According to a further embodiment of the invention, the first and second means are operative such that all transitions between the first and second modes of operation occur substantially synchronously.

According to a further embodimentof the invention, there is also provided a primary means for coupling in a primary mode of operation

(1) the second drive terminal to the drive wheels.

According to yet another embodiment of the invention, the primary and first means are operative such that all transitions between the primary and first modes of operation occur substantially synchronously.

According to still another embodiment of the invention, accessory drive means are provided so that the speed range of the accessories required to operate a vehicle is limited to a narrow band.

4

DESCRIPTION OF INVENTION

The invention will be more fully understood and appreciated from the following detailed description taken in conjunction with the the drawings in which:

Fig. 1 is a schematic diagram of a preferred embodiment of the invention;

Fig. 2 is a plot of the variation in the displacement of the hydrostatic units;

Fig. 3 is a plot of tractive effort as a function of vehicle velocity;

Fig. 4 is a schematic diagram of an alternative embodiment of the present invention;

Fig. 5.is a plot of the variation in the displacement of the hydrostatic units of the embodiment of Fig. 4.

Fig. 6 is a plot of tractive effort as a function of vehicle velocity of the embodiment of Fig. 4.

Fig. 7 is a schematic diagram of a further alternative embodiment of the present invention showing a power take off for an accessory drive;

Fig. 8 is a plot of the engine speed, flywheel speed and accessory drive speed of the embodiment of Fig. 7.

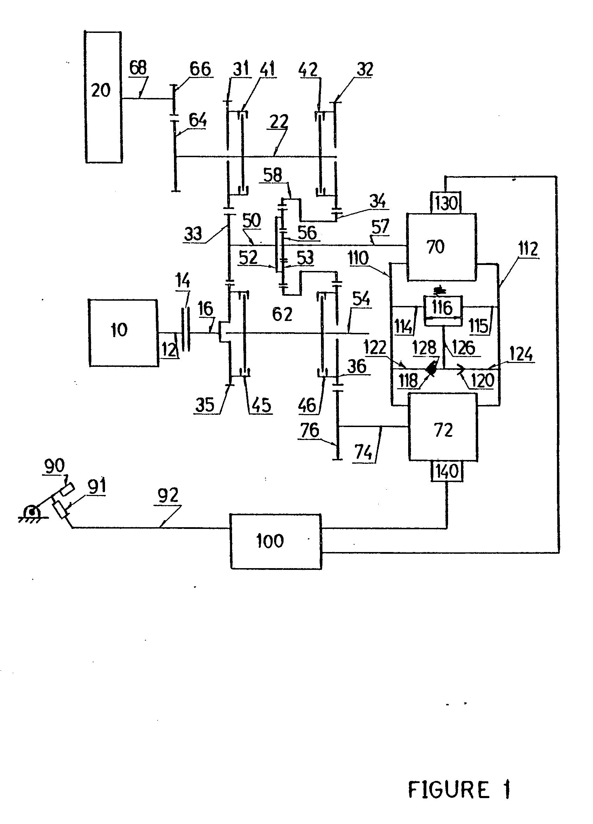

Referring now to Fig. 1, there is shown in schematic diagram form a preferred embodiment of the vehicle drive system of the present invention.

A heat engine 10 has an output crank shaft 12 which is coupled to an input shaft 16 via an engine clutch 14 so that when engine clutch 14 is engaged, the heat engine 10 is drivingly connected to input shaft 16.

Input shaft 16 is fixedly connected to a gear 35 and gear 35 is drivingly connected to a gear 33. Gear 35 is drivingly connected to output shaft 54 via a clutch 45 so that if clutch 45 is engaged a driving connection is established between gear 35 and output shaft 54.

Gear 33 is fixedly connected to a shaft 50 which is in turn fixidely connected to a carrier 52 of a planetary or differential gear set generally referred to by 62. Carrier 52 has a multiplicity of planet gears 53. The planet gears 53 are drivingly connected to a sun gear 56 and a ring gear 58 of the planetary set 62.

The ring gear 58 is fixedly connected to a gear 34 and the gear 34 is drivingly connected to a gear 32 and a gear 36. Gear 32 is drivingly connected to a flywheel input shaft 22 via a clutch 42 such that if clutch 42 is engaged a driving connection is established between gear 32 and flywheel input shaft 22. The gear 36 is drivingly connected to output shaft 54 via clutch 46 so that if clutch 46 is engaged, a driving connection is established between gear 36 and output shaft 54.

The gear 33 is drivingly connected to a gear 31 and gear 31 is drivingly connected to the flywheel input shaft 22 via a clutch 41 such that if clutch 41 is engaged, a driving connection is established between gear 31 and flywheel input shaft 22.

The flywheel input shaft 22 is fixidely connected to a gear 64 which is in turn drivingly connected a gear 66. Gear 66 is fixidely connected to flywheel 20 via a shaft 68.

The sun gear 56 of planetary gear set 62 is fixidely connected to a variable displacement hydrostatic pump 70 via shaft 57. The pump 70 drives a variable displacement hydrostatic motor 72 via oil conduits 110 and 112. If the pump 70 is functioning as a pump, high pressure oil will be delivered to the motor 72 via conduit 110 and low pressure oil will be returned from the motor 72 to the pump 70 via conduit 112. If the pump 70 is functioning as a motor, high pressure oil will be delivered via conduit 112 and low pressure oil returned via conduit 110. The hydrostatic motor 72 is fixidely connected to a gear 76 via a shaft 74 and gear 76 is drivingly connected to gear 36.

The hydraulic conduits 110 and 112, which are normally used to transmit hydraulic power from the pump 70 and motor 72 and vice versa, are hydraulically connected to a high pressure relief valve 116 via hydraulic conduits 114 and 115. The high pressure relief valve 116 is of the conventional type such as described in catalog 45-8001 GB published by Volvo Flygmotor of S-461 81, Trolhattan, Sweden. Conduits 110 and 112 are also hydraulically connected to check valves 118 and 120 via hydraulic conduits 122 and 124. The check valves 118 and 120 are also connected to the high pressure relief valve 116 via hydraulic conduit 126. The arrangement and connections of the check valves 118 and 120 are also described in the aforementioned catalog by Volvo Flygmotor.

The displacement of the hydrostatic pump 70 is controlled by a servocontroller 130 and the displacement of hydrostatic motor 72 is controlled by a servocontroller 140. Servocontrollers 130 and 140 are of the conventional type as described in the aforementioned catalog by Volvo Flygmotor.

The servocontrollers 130 and 140 receive commands from a control apparatus 100 to adjust the displacement of the pump 70 and the motor 72 according to driver commands, the speeds of the engine 10, flywheel 20 and vehicle. The command of the driver is provided by an accelerator pedal 90 which activates a conventional position sensor 91. The signal from position sensor 91 is provided to control apparatus 100 via the electrical connection 92.

The control of the system may be carried out automatically by means of a microcomputer controller 100 which processes signals indicative of the demands of the driver and of the prevailing operating conditions, and provides control signals for actuating the various components of the system. For clarity of illustration, only some of the control connections of the microcomputer controller 100 and the components of the system controlled are shown.

The clutches 41,42,45 and 46 may be of the conventional hydraulically activated type. It will be apparant however that the aforementioned clutches may be of any suitable type.

The apparatus is disposed for operation in the first mode when clutches 41, 46 and engine clutch 14 are engaged. The engine 10 is drivingly connected to the flywheel 20, and will rotate at a speed proportional to the speed of the flywheel 20, via shaft 12, clutch 14, shaft 16, gears 35,33 and 31, clutch 41, shaft 22, gears 64 and 66, and shaft 68. Thus, power from the engine 10 and flywheel 20 may be transferred to the shaft 50 and thence to the carrier 52 of planetary gear set 62.

Power from the carrier 52 is transmitted further via a hydraulic path from the planet gears 53, sun gear 56, shaft 57, hydrostatic pump 70, conduits 110 and 112, hydrostatic motor 72, shaft 74, gears 76 and 36, clutch 46 and finally to output shaft 54.

Power fom the carrier 52 is transmitted via a highly efficient purely mechanical path from the planet gears 53 to ring gear 58, gear 34, gear 36, clutch 46 and finally to output shaft 54.

The power flowing through the hydraulic path is subjected to hydraulic losses in the pump 70 and motor 72 while the power flowing via the mechanical path does not suffer from these losses.

As a result of the power flowing from the engine 10 and flywheel 20 to the output shaft 54 and thence to the drive wheels of the vehicle, the vehicle accelerates. This continues until synchronization is established between flywheel input shaft 22 and gear 32 and between output shaft 54 and gear 35. At this point, clutches 42 and 45 are engaged and clutches 41 and 46 are disengaged and the apparatus is thereby disposed for operation in the second mode. The determination of synchronization and activation of the clutches 41, 42, 45 and 46 are carried out in a manner substantially the same as that described in the aforementioned prior art U.S. patent 4,126,200.

In the second mode of operation, the engine 10 is directly coupled to output shaft 54 via shaft 12, clutch 14, shaft 16 and clutch 45. The power produced by the heat engine 10 is therefore subjected to a minimum of losses, resulting in a very high efficiency of power transmission.

Power from the flywheel 20 is transmitted via shaft 68, gears 66 and 64, flywheel input shaft 22, and clutch 42 to gears 32 and 34. Power is transmitted from gear 34 via a mechanical power path to ring gear 58, planet gears 53, carrier 52, shaft 50, gears 33 and 35 and finally to output shaft 54 via clutch 45. Power is transmitted from gear 34 via a hydraulic path to gears 36 and 76, shaft 74, hydrostatic motor 72, conduits 110 and 112, hydrostatic pump 70, shaft 57, sun gear 56, planet gears 53, carrier 52, shaft 50, gears 33 and 35 and finally to output shaft 54 via clutch 45.

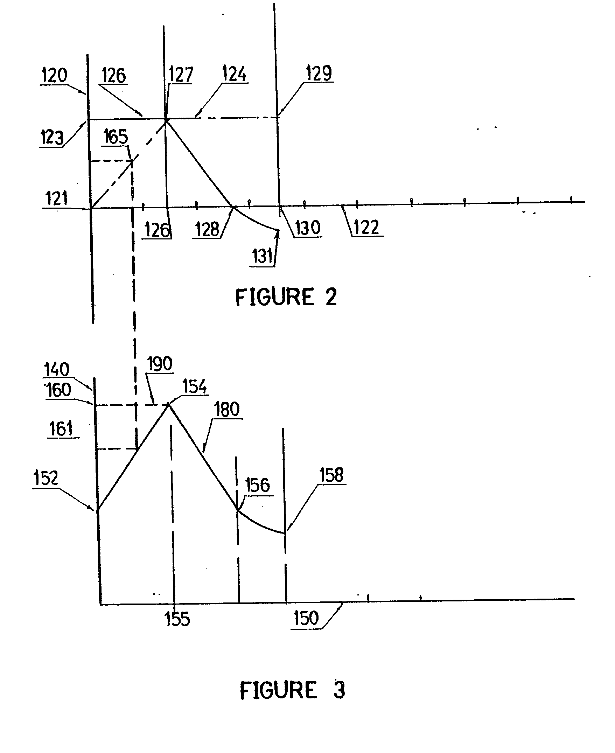

Referring now to Fig. 2 there is shown the displacement of the hydrostatic pump 70 and motor 72. The vertical axis, indicated by 120, represents the displacement of the variable displacement pump 70 and motor 72, so that at a level corresponding to 123, the pump 70 and motor 72 are at full displacement. At a level corresponding to the horizontal axis 122, the displacement of the hydrostatic units is zero so that the unit may rotate without pumping any oil. A level below the horizontal axis indicates a displacement in the negative sense so that rotation of the pump or motor will cause a reversal in the direction of oil flow. The horizontal axis, indicated by 122, SUBSTANTIALLY REPRESENTS velocity, so that at point 121, vehicle velocity is zero speed and at point 130 the vehicle is at an intermediate speed corresponding to the speed at which the shift takes place between the first and second modes of operation.

The displacement of the motor 72, indicated by solid curve 126, starts at maximum displacement at zero vehicle speed, as indicated by point 123. The displacement of the pump 70, indicated by the dashed curve 124, starts at zero at zero vehicle speed as indicated by point 121.

The displacement of the pump 70 first increases to its maximum value at point 127, and is then maintained at its maximum value until point 129, the point at which the transition from the first mode to the second mode of operation takes place. The displacement of of the motor 72 is maintained at its maximum value indicated by level 123, until point 127, at which point the drive apparatus produces the maximum possible output torque. The displacement of the motor 72 is then decreased towards zero displacement at point 128. At this point, the motor 72 accepts no oil and the pump 70 is at zero rotational speed. Point 128 therefore represents a mechanical point wherein no power is transmitted through the hydrostatic units, all power is transmitted through the mechanical path, and the transmission is at its maximum efficiency.

The displacement of the motor 72 is further decreased in the negative sense to point 131 when the transmission is ready for the shift from the first mode to the second mode of operation. In the region from point 128 to point 131, circulating power is present in the transmission as the total power transmitted through the mechanical path exceeds the total output power and the hydraulic units circulate this excess power back to the input ring gear 58.

Referring now to Fig. 3, in conjunction with Fig. 2, there is shown the maximum torque capacity of the apparatus of Fig.1. The vertical axis 140 represents the driving torque available at the output shaft 54 and the horizontal axis 150 represents the vehicle velocity. The indicated torque is produced when the pressure developed in the hydrostatic units 70 and 72 reaches a maximum level denoted by Pmax, generally 350 bar.

The torque available to propel the vehicle is proportional to the torque applied to output shaft 54. In the first mode of operation output shaft 54 is driven by the ring gear 58 via gears 34 and 36. The torque applied to the pump 70 is proportional to the displacement of the pump 70. In the first mode of operation, output shaft 54 is also driven by the hydrostatic motor 72, via shaft 74 and gears 76 and 36. The torque developed by the motor 72 is proportional to the displacement of the motor 72.

It is apparant to anyone normally skilled in the art that in the first mode of operation, the torque on output shaft 54 is given by

$$T54 = Z*Tp*Z36/Z34 + Tm*Z36/Z76$$

where T54 is the torque developed on output shaft 54, Z is the ratio of the diameter of the ring gear 58 divided by the diameter of the sun gear 56, Tp is the torque applied to rotate the pump 70, Tm is the torque developed by the motor 72, Z36 is the number of teeth on gear 36 Z34 is the number of teeth on gear 34 and Z76 is the number of teeth on gear 76.

The torque developed at the output shaft 54 therefore is proportional to the torque developed by the motor 72, plus the proportional amount of the torque required to rotate the pump 70.

If the displacement of the pump 70 and motor 72 follows the values indicated by curves 124 and 126 of Fig. 2, the torque on output shaft 54 will start at point 152 of Fig. 3 at zero vehicle speed when the displacement of the pump 70 is zero and the displacement of the motor 72 is at its maximum. The output torque increases to point 154 when the displacement of the pump 70 and motor 72 are both at their maximum values. The output torque decreases to point 156 at the mechanical point of the transmission wherein the displacement of the motor 70 is zero. The output torque decreases further to point 158 as the sense of the displacement of the motor 72 is reversed and the motor 72 actually functions as a pump and torque is required to rotate it.

To increase the value of the starting torque, the control apparatus 100 issues a command to servocontroller 130 to quickly increase the displacement of pump 70. If the displacement of pump 70 is increased to its maximum value, then the full pump torque, times the appropriate proportionality factors, will appear at output shaft 54. This output torque is indicated by point 160. As the pump displacement increases, the oil produced by the pump 70 flows to the motor 72 via conduit 110 and is returned via conduit 112. At zero vehicle speed however, the motor 72, which is directly connected to the vehicle in mode 1, is at zero speed. Hence, the motor 72 cannot accept the oil produced by the pump 70. The oil pressure will rise until the level Pmax at which point the relief valve 116 will open, thereby allowing the oil to flow from the high pressure conduit 110 to the low pressure conduit 112. The pressure that is developed acts on the motor 72 to produce output torque but the hydraulic power is wasted by flowing through the relief valve 116. As the vehicle accelerates, the motor 72 rotates more rapidly and accepts more of the oil produced by the pump 70. The oil accepted by the motor 72 does useful work in accelerating the vehicle. The oil flowing through the relief valve 116 represents wasted energy and appears as a temperature rise in the oil. When the vehicle reaches the speed indicated by point 155, the motor 72 is rotating fast enough to accept all of the oil produced by the pump 70. The oil pressure will drop below Pmax and relief valve 116 closes.

It is apparent that the increased output torque represented by the difference between the level of points 160 and 152 is accomplished at the expense of wasted energy. It is also apparent that this increase in starting torque can be utilized only if sufficient torque can be applied at the carrier 52 to rotate the pump 70 at full displacement and maximum pressure Pmax, times the differential diameter ratio Z plus one. This large amount of torque must be provided either by the heat engine 10 or by the flywheel 20. As will be seen in the following numerical example, this large torque is normally not available from heat engine 10.

To minimize the amount of energy wasted through relief valve 116, control apparatus 100 senses the output torque desired by the driver as indicated by position sensor 91. The amount of desired torque is denoted T91. If the value of T91 is less than that indicated by the line extending from 152 to 154, the control apparatus 100 issues appropriate commands to servocontroller 130 so that the displacement of the pump 70 follows the line extending from 121 to 127 of Fig. 2. The pressure developed by the pump 70 will depend upon the resistance of the vehicle and by the rate of change of the displacement of pump 70. This pressure will generally be below Pmax so that no energy is wasted in the relief valve 116.

If the value of T91 is greater than that indicated by the line from 152 to 154, say at the level indicated by point 161, the control apparatus 100 will issue appropriate commands to servocontroller 130 to quickly increase the pump displacement to the level indicated by point 165 of Fig. 2. The torque on output shaft 54 is increased by the contribution of the extra displacementof the pump 70 so that the desired output torque indicated by 161 is obtained.

It will be apparrant to anyone normally skilled in the art that microcomputer control apparatus 100 may be suitably programmed to provided any desired output torque characteristic up to the level indicated by 190 between zero vehicle speed and the speed indicated by point 155, thereby obtaining the desired output torque with a minimum of energy lost through the relief valve 116.

As a numerical example of the increase in starting torque attainable with the apparatus of the present invention , the following numerical example is considered:

$$Z33 = 36$$
$$Z34 = 25$$
$$Z35 = 31$$
$$Z36 = 43$$
$$Z76 = 24$$
$$Z = 2.0$$
$$Dpmax = 100 \ cc/rev$$
$$Dmmax = 100 \ cc/rev$$
$$Pmax = 350 \ bar$$

where $Zi$ represents the number of teeth on gear i (i=33,34,35,36,76), Z is the ratio of the diameter of ring gear 58 and sun gear 56, Dpmax and Dmmax are the maximum displacement of the pump 70 and motor 72. It will be appreciated that the maximum displacement of the pump 70 and motor 72 need not be equal.

The maximum output torque, at zero vehicle speed, of the apparatus of the present invention, as represented by point 160, is approximately 2900 N-m. The maximum output torque of the prior art device of U.S. patent 4,126,200, with the exact same gear teeth, displacement and pressures, as represented by point 152, is approximately 970 N-m. The present invention therefore increases the driving torque available at zero vehicle speed by a factor of almost 3:1, without increasing the displacement of the hydrostatic elements 70 and 72 and without changing the principle operating characteristics of the apparatus.

If the heat engine 10 were to produce all the torque necessary to provide the output torque of 2900 N-m, it would be required to produce in excess of 1900 N-m of torque. This is far in excess of the normal torque capacity of heat engine 10. The required torque therefore is produced by flyhweel 20, whose torque capacity is limited only by the strength of the mechanical components used to decelerate it. It is apparant then that this torque multiplication can be most effectively realized only if there is a flywheel in the system.

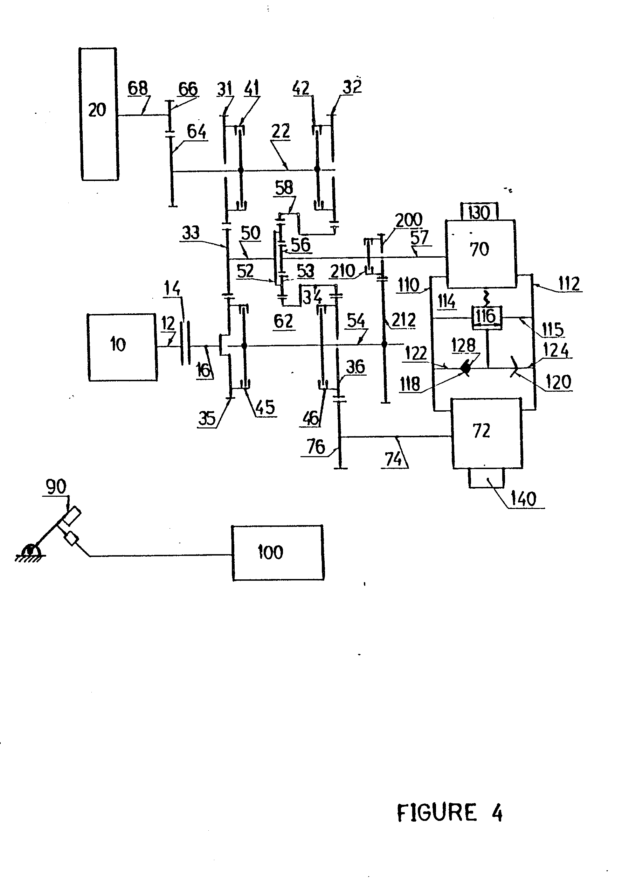

A further embodiment of the drive system of the present invention is illustrated in Fig. 4, wherein those parts and units having counterparts in the embodiment of Fig. 1 are designated by like reference numerals. Referring now to Fig. 4, there is provided a gear 200 which is connected to shaft 57 via a clutch 210 so that if clutch 210 is engaged, a drving connection is established between gear 200 and shaft 57. Gear 200 is drivingly connected to a gear 212 which is fixedly attached to transmission output shaft 54.

The apparatus is disposed for operation in a primary mode when clutches 41, 210 and engine clutch 14 are engaged. The engine 10 is drivingly connected to the flywheel 20, and will rotate at a speed proportional to the speed of the flywheel 20, via shaft 12, clutch 14, shaft 16, gears 35,33 and 31, clutch 41, shaft 22, gears 64 and 66, and shaft 68. Thus, power from the engine 10 and flywheel 20 may be transferred to the shaft 50 and thence to the carrier 52 of planetary gear set 62.

Power from the carrier 52 is transmitted further via a hydraulic path to planet gears 53, ring gear 58, gears 34,36 and 76, shaft 74, hydrostatic motor 72, conduits 110 and 112, hydrostatic pump 70, shaft 57, clutch 210, gear 200, gear 212 and finally to output shaft 54.

Power fom the carrier 52 is transmitted via a highly efficient purely mechanical path from the planet gears 53 to sun gear 56, shaft 57, clutch 210, gear 200, gear 212 and finally to output shaft 54. It is apparant that the torque produced by the pump 70, operating as a hydrostatic motor, is multiplied by the number of teeth in gear 212 divided by the number of teeth in gear 200. Since this quotient may be substantially higher than unity, say

14

four or five, the output torque of the pump 70 is multiplied, thereby increasing the starting torque of the transmission.

The vehicle accelerates in the primary mode until the speed of gear 36, as determined by the speed of the ring gear 34, reaches the speed of output shaft 54. At this point, the control apparatus 100 issues a command to engage clutch 46, thereby establishing a driving connection between gear 36 and shaft 54. The control apparatus 100 simultaneously issues a command to disengage clutch 210 thereby allowing gear 200 to rotate at a speed which is different from shaft 57. The drive system is thereby placed in the configuration for operation in the first mode, as described hereinabove. The transition between the primary mode and the first mode is therefore synchronous and the same advantages of the synchronous shift between the first mode and the second mode of the prior art device described in U.S. patent 4,126,200 are obtained.

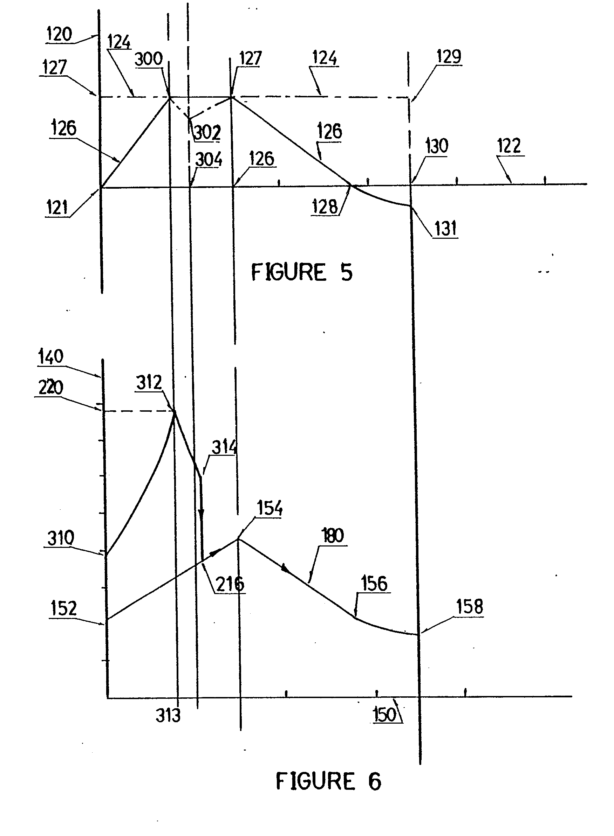

The displacement of the hydrostatic pump 70 and motor 72 as a function of vehicle velocity of the embodiment of Fig. 4 is illustrated in Fig. 5, wherein those parts and units having counterparts in Fig. 2 are designated by like reference numerals. Referring now to Fig. 5, the displacement of the motor 72, indicated by solid curve 126, starts at zero displacement at zero vehicle speed, as indicated by point 121. The displacement of the pump 70, indicated by the dashed curve 124, starts at its maximum value at zero vehicle speed as indicated by point 127.

The displacement of the motor 72 first increases to its maximum value at point 300, and is then maintained at its maximum value until point 127, after which it is further decreased until point 128. The displacement of the motor 72 is then increased in the opposite sense until point 131, at which point the drive apparatus is in full synchronization and ready for the shift to the second mode of operation.

The displacement of the pump 70 is maintained at its maximum value from point 127 until point 300, after which it is decreased until point 302. At point 302, the drive apparatus is in synchronization and the shift is made from the primary mode to the first mode of operation. The displacement of the pump is then increased to point 127, after which it is maintained at its maximum value until point 129, when the apparatus is in full synchronization and ready for the shift from the first mode to the second mode of operation.

It is apparent to anyone normally skilled in the art that in the primary mode of operation, the torque on output shaft 54 is given by

$$T54 = Tm*Z34/Z76*Z212/Z200/Z + Tp*Z212/Z200$$

where Z212 is the number of teeth on gear 212 and Z200 is the number of teeth on gear 200.

The variation in the maximum torque capacity of the apparatus of Fig.4 is shown in Fig. 6, wherein those parts and units having counterparts in Fig. 3 are designated by like reference numerals. Referring now to Fig. 6, in conjunction with Fig. 5, the torque capacity of the drive apparatus of Fig. 1 is shown in curve 180 and is repeated here for reference purposes. The torque capacity of the embodiment of Fig. 4, as the displacement of the pump 70 and motor 72 are varied according to the values illustrated in Fig. 5, is shown by the solid curve from point 310, 312,314, 216. After point 216, the apparatus is in the first mode of operation and the maximum output torque is substantially the same as that of the apparatus of Fig. 1, indicated by curve 180 between points 216, 154, 156 and 158.

It will be apparent to anyone normally skilled in the art that the maximum starting torque indicated by point 310 may be increased to the level indicated by point 220 by increasing the displacement of the motor from zero displacement indicated by point 121 of Fig. 5 to full displacement indicated by point 127 of Fig. 5. The pressure in conduits 110 or 112 will then exceed Pmax and the excess oil will flow through relief valve 116. It will also be apparent to anyone normally skilled in the art that any desired output torque characteristic up to the level indicated by point 220 may be achieved between zero vehicle speed and the speed represented by point 313, up to the level by suitable programming of microcomputer control apparatus 100.

As a example of the increase in starting torque attainable with the apparatus of the Fig. 4 , the following numerical example is considered:

0159445

16

Z200= 17
Z212= 92

The remaining data for the embodiment of Fig. 4 is identical to the data of the embodiment of Fig. 1, except for the addition of the gears 200 and 212, which are related to the primary mode of operation. It is a particular advantage of the embodiment of Fig. 4 that the primary mode of operation may be added on to the embodiment of Fig. 1 while retaining a large number of parts. Hence, the embodimentof Fig. 1 would be used for normal applications, while the additional equipment for the embodiment of Fig. 4 could be used for applications requiring a very large increase in starting torque.

The maximum output torque, at zero vehicle speed, of the apparatus of the embodiment of Fig. 4, as represented by point 220 of Fig. 6, is approximately 4580 N-m. The maximum output torque at zero vehicle speed attainable without the use of the relief valve 116 to effectively multiply the starting torque, as represented by point 310, is approximately 3050 N-m. The present invention therefore increases the driving torque available at zero vehicle speed by a factor of almost 1.5:1 without increasing the displacement of the hydrostatic elements 70 and 72 and without changing the principle operating characteristics of the system.

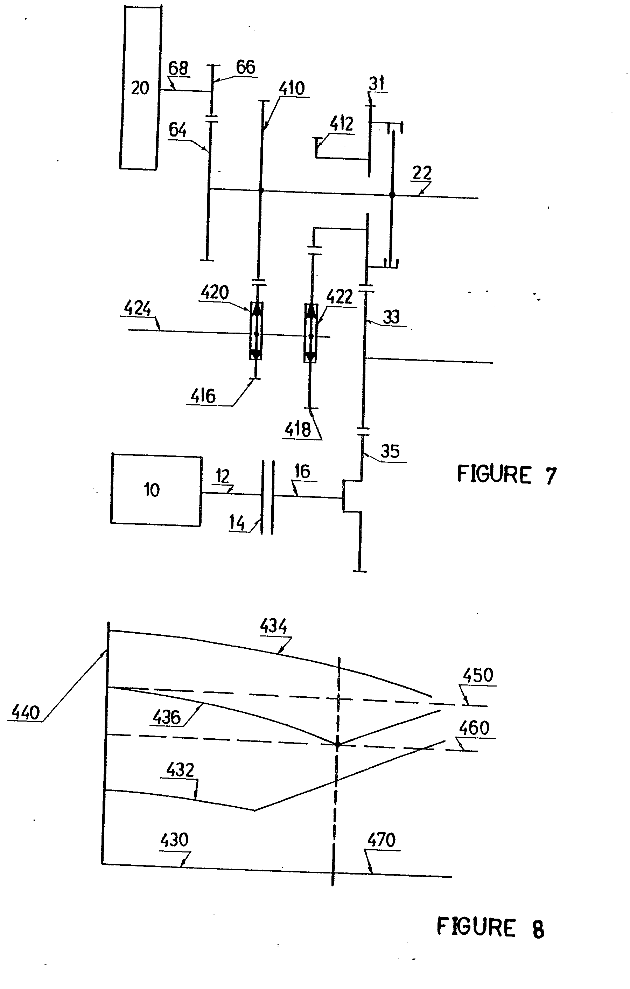

A further embodiment of the drive system of the present invention is illustrated in Fig. 7, wherein those parts and units having counterparts in the embodiment of Fig. 1 or Fig. 4 are designated by like reference numerals. Referring now to Fig. 7, there is provided a first power take off gear 410 fixedly attached to flywheel input shaft 22 and a second power take off gear 412 fixedly attached to gear 31. It is apparant that the first power take off gear 410 rotates at a speed proportional to the speed of the flywheel 20 and that the second power take off gear 412 rotates at a speed which is proportional to the speed of the heat engine 10 if clutch 14 is engaged.

First power take off gear 410 is drivingly connected to a gear 416 and second power take off gear 412 is drivingly connected to to gear 418. Gear 416 is connected to accessory output shaft 424 via an over-running clutch 420. Over-running clutch 420 is arranged so that it over runs when the speed of the shaft 424 exceeds the speed of the gear 416. Gear 418 is connected to accessory drive output shaft 424 via an over-running clutch 422. Over-running clutch 422 is arranged so that it over-runs when the speed of shaft 424 exceeds the speed of the gear 418.

It is apparant then that the accessory output shaft 424 is driven by the faster of the two gears 416 and 418.

Referring now to Fig. 8, there is shown the speed of the accessory drive shaft 424 as a function of vehicle velocity. The horizontal axis, denoted by 430, represents the velocity of the vehicle. The vertical axis, denoted by 440, represents rotational speed. Curve 434 is substantially equal to the rotational speed of flywheel 20. It is seen that the speed of the flywheel 20 decreases as the speed of the vehicle increases because the flywheel is transferring energy to accelerate the vehicle. Curve 432 substantially represents speed of the engine 10. In the first mode of operation, the speed of heat engine 10 is proportional to the speed of the flywheel 20 and in the second mode of operation, the speed of heat engine 10 is proportional to the speed of the vehicle.

Curve 436 represents the speed of the accessory output shaft 424 as a function of vehicle velocity. The ratios of the diameters of gears 410 and 416, and gears 412 and 418 are such that at vehicle speeds below that represented by 470, typically 50 km/hr, gear 416 rotates faster than gear 418 so that the over-running clutch 418 over-runs shaft 424 and the accessory output shaft is driven by gear 416. The accessory drive shaft 424 therefore is driven from the flywheel 20 at vehicle speeds below 470.

As the speed of the vehicle increases, the speed of the flywheel 20 and the speed of gear 416 decrease. Also, the speed of gear 418, which is proportional to the speed of heat engine 10 increases as the vehicle increases in speed in the second mode. At speed 470, the speeds of gears 416 and 418 are substantially equal. Any further increase in vehicle speed results in an increase in speed of gear 418 and a decrease in speed of gear 416. It is apparant then that at speeds above 470, the accessory output

18

shaft is driven by gear 418, which is proportional to the speed of the vehicle.

The speed of accessory drive shaft 424 therefore varies between the limits represented by line 460 and line 450. The range of variation in the accessory drive speed can therefore be limited to approximately 30%. It is apprant to anyone skilled in the art that the cross over point 470 may be adjusted by different speed ratios for the power take off gears 410 and 416, and 412 and 418.

It is apparant to anyone skilled in the art that because of the narrow speed range indicated by 460 and 450, the size and power consumption of the various accessories driven by accessory output shaft 424 may be reduced.

The various features of the invention have been described hereinabove in detail with reference to diagrams illustrating the construction and operation of specific preferred embodiments of the invention. It is to be clearly understood that many other embodiments of the invention may also be constructed and operated within the scope of the invention. / Therefore, the invention is limited only by the claims which follow:

The features disclosed in the foregoing description, in the following claims and/or in the accompanying drawings may, both separately and in any combination thereof, be material for realising the invention in diverse forms thereof.

CLAIMS

1. A vehicle drive system including:

a source of rotational energy;

a flywheel;

first variable displacement hydrostatic means;

second variable displacement hydrostatic means;

differential gear means comprising a first drive terminal,
a second drive terminal and a third drive terminal;
and including:

means for selectable coupling of said first and second
variable displacement hydrostatic means and said source
of rotational energy and said flywheel to drive
wheels of a vehicle; and including

first means for coupling in a first mode of operation
(1) said flywheel and said source of rotational energy to
said first drive terminal;
(2) said second drive terminal to said first variable displacement hydrostatic means;
(3) said third drive terminal to said drive wheels;

second means for coupling in a second mode of operation
(1) said flywheel to said third drive terminal;
(2) said engine and said first drive terminal to said
drive wheels;

relief valve means operable between said first and second
variable displacement hydrostatic means;

control means operative in response to demands of the driver
to adjust the displacement of said first and said second
variable displacement hydrostatic means to obtain a
predetermined output drive torque.

2.  A vehicle drive system according to claim 1 wherein, said first means and said second means comprise clutch means and control means, said control means operative in response to a condition of synchronization so that transitions between said first and said second modes of operation occur substantially synchronously.

3.  A vehicle drive system according to claim 2 wherein said drive system also comprises a primary means for coupling in a primary mode of operation

(1)said second drive terminal to said drive wheels.

4.  A vehicle drive system according to claim 3 wherein, said primary means and said first means comprise clutch means and control means, said control means operative in response to a condition of synchronization so that transitions between said primary means and said first means of operation occur substantially synchronously.

5.  A vehicle drive system according to claim 1 or claim 3 and including a power-take-off drive system, said power-take-off being driven by said flywheel or by said engine, depending upon the operating speed of said flywheel or said engine, wherein the overall speed variation of said power-take-off is substantially less than the overall speed variation of said engine and said flywheel.

FIGURE 1

FIGURE 2

FIGURE 3

FIGURE 4

0159445

FIGURE 5

FIGURE 6

FIGURE 7

FIGURE 8